# EUROPEAN PATENT APPLICATION

(11) **EP 4 239 570 A1**
(43) Date of publication of application: **06.09.2023**
(21) Application number: 22209302.3
(22) Date of filing: 24.11.2022
(51) Int. Cl.: G06T 7/00

(54) **GENERATION PROGRAM, GENERATION METHOD, AND INFORMATION PROCESSING DEVICE**

(30) Priority: 03.03.2022 JP 2022032821
(71) Applicant: FUJITSU LIMITED, Kawasaki-shi, Kanagawa 211-8588 (JP)
(72) Inventor: Yasutomi, Suguru, Kawasaki-shi, Kanagawa, 211-8588 (JP); Sakai, Akira, Kawasaki-shi, Kanagawa, 211-8588 (JP); Katoh, Takashi, Kawasaki-shi, Kanagawa, 211-8588 (JP); Uemura, Kento, Kawasaki-shi, Kanagawa, 211-8588 (JP)
(74) Representative: Hoffmann Eitle

(57) **Abstract**

An information processing device acquires (22) output image data that is acquired by inputting image data indicating a pseudo-shadow area to an auto-encoder that is generated by machine learning using label image data contained in training data, the label image data indicating a shadow area in ultrasound image data of a captured target, and generates (22) augmented data corresponding to the training data by combining the acquired output image data with the ultrasound image data.

## Description

### FIELD

The embodiments discussed herein are related to a generation program, a generation method, and an information processing device.

### BACKGROUND

As a non-destructive and non-invasive method for inspecting targets, there is ultrasonography. Ultrasonography is an inspection technique in which ultrasound waves are generated from a probe, ultrasound image data is acquired by visualizing the intensity and timing of reflections from a target, and the acquired ultrasound image data is used for diagnosis.

There is a known technology that utilizes a deep neural network (DNN) for ultrasound image data to recognize and detect those captured in the image. Like DNNs in general, with the DNN for ultrasound image data, overfitting occurs when data is insufficient, so that machine learning of the DNN is performed by increasing training data through data augmentation.

As data augmentation, a technique for creating variations by randomly adding noise to input data is used. In order to prevent overfitting, it is important to generate training data for various cases that are likely to actually exist. For example, when image data is a target, random noise is applied to each pixel, the luminance of the entire image data is randomly changed, the contrast of the entire image data is randomly changed, and the hue of the entire image data is randomly changed. The related technologies are described, for example, in: Japanese Patent Application Laid-open No. 2020-110371.

However, it is difficult to adapt the data augmentation to ultrasound image data, so that it is not possible to prevent overfitting. For example, variations in ultrasound waves are mostly due to acoustic shadows that are called shadows caused by materials that are hard and reflect ultrasound, such as bones, and it is not possible with normal data augmentation to create such variations.

Accordingly, it is an object in one aspect of an embodiment of the present invention to provide a generation program, a generation method, and an information processing device capable of preventing overfitting of a machine learning model using ultrasound image data.

### SUMMARY

According to an aspect of an embodiment, a generation program that causes a computer (10) to execute a process including acquiring (22) output image data that is acquired by inputting image data indicating a pseudo-shadow area to an auto-encoder that is generated by machine learning using label image data contained in training data, the label image data indicating a shadow area in ultrasound image data of a captured target, and first generating (22) augmented data corresponding to the training data by combining the acquired output image data with the ultrasound image data.

### BRIEF DESCRIPTION OF DRAWINGS

FIG. 1 is a diagram for describing an information processing device according to a first embodiment;
FIG. 2 is a diagram for describing general data augmentation;
FIG. 3 is a diagram for describing a shadow in ultrasound image data;
FIG. 4 is a functional block diagram illustrating a functional configuration of the information processing device according to the first embodiment;
FIG. 5 is a diagram for describing an example of label data;
FIG. 6 is a diagram for describing machine learning of a shadow generator;
FIG. 7 is a diagram for describing relationships between types of probes and types of shadows;
FIG. 8 is a diagram for describing generation of rough pseudo-shadow image data;
FIG. 9 is a diagram for describing generation of high-quality pseudo-shadow image data;
FIG. 10 is a diagram for describing generation of augmented data;
FIG. 11 is a diagram for describing generation of a machine learning model using the augmented data;
FIG. 12 is a flowchart illustrating a flow of an augmented data generation process;
FIG. 13 is a diagram for describing generation of augmented data using statistical data;
FIG. 14 is a diagram for describing generation of augmented data using statistical data; and
FIG. 15 is a diagram for describing an example of a hardware configuration.

### DESCRIPTION OF EMBODIMENTS

Preferred embodiments will be explained with reference to accompanying drawings. Note that the present invention is not limited by the embodiments. Each of the embodiments can also be combined as appropriate within a range that has no contradiction.

### [a] First Embodiment

### Description of Information Processing Device

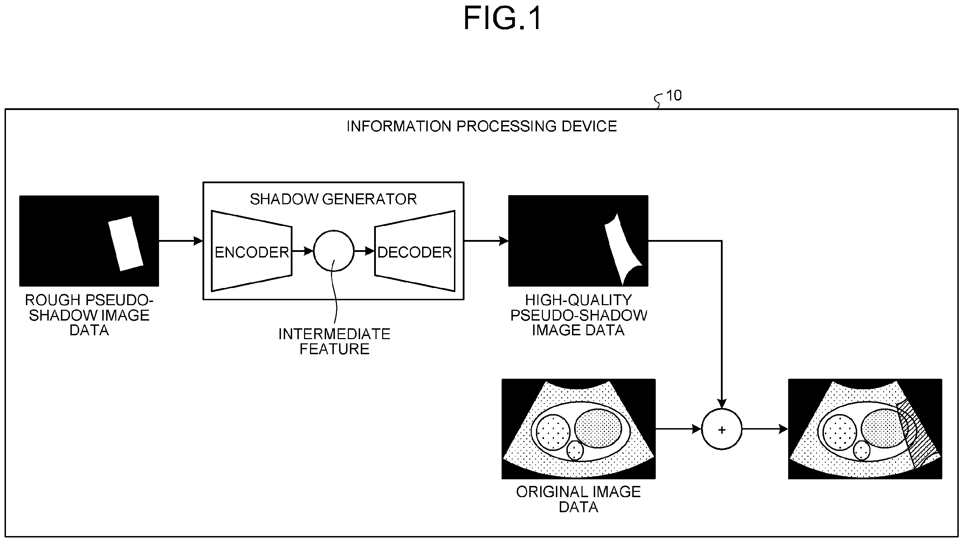

FIG. 1 is a diagram for describing an information processing device 10 according to a first embodiment. The information processing device 10 illustrated in FIG. 1 is an example of a computer that generates training data used for machine learning of a machine learning model for performing recognition of organs, detection, removal, and the like of shadows captured in ultrasound image data, in response to input of the ultrasound image data acquired through ultrasonography.

DNN and the like are used for a machine learning model. Like DNNs in general, overfitting occurs when data is insufficient also in the DNN for ultrasound image data, so that the training data is increased by data augmentation.

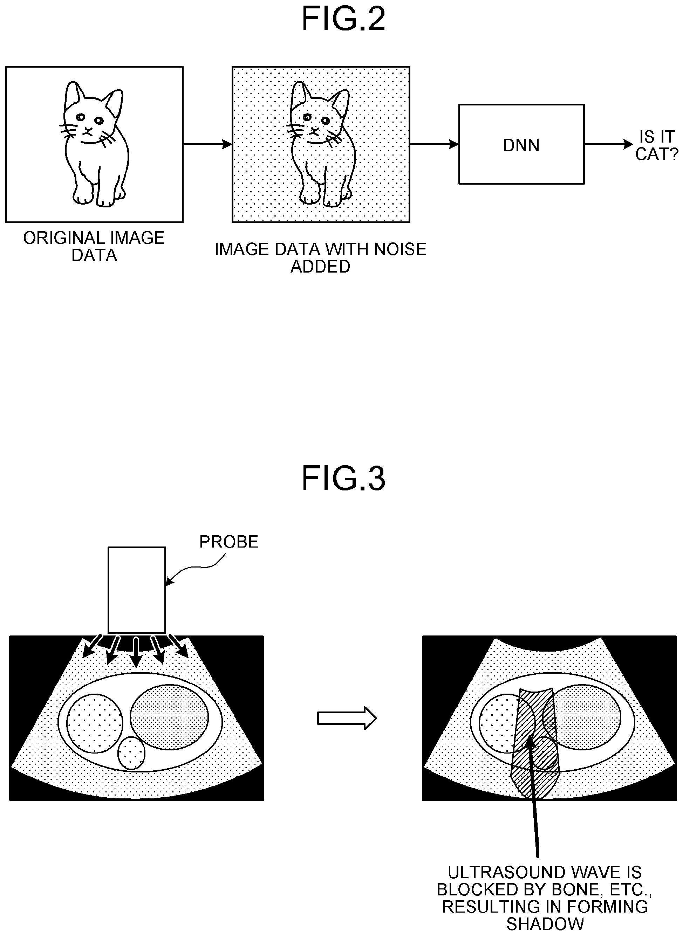

FIG. 2 is a diagram for describing data augmentation in general. As illustrated in FIG. 2, in data augmentation, random noise is added to each pixel, the luminance of the entire image data is randomly changed, and the contrast of the entire image data is randomly changed or the hue of the entire image data is randomly changed to generate, from original image data of a cat, for example, augmented image data with the noise added thereto. The augmented image data is then input to the DNN (machine learning model), and machine learning of the DNN is executed such that the output result of the DNN matches the label (cat) of the augmented image data.

However, ultrasound image data captured in ultrasonography contains noise that is the what is called shadow. Since this shadow is different from the noise described in FIG. 2 in terms of forms, occurrence conditions, and the like, it is difficult with the data augmentation to generate training data useful for machine learning.

FIG. 3 is a diagram for describing a shadow of ultrasound image data. As illustrated in FIG. 3, ultrasound image data is acquired by emitting ultrasound waves from a probe to a target (for example, an organ) and visualizing the intensity and timing of the reflection from the target. For example, ultrasound waves are emitted radially or in parallel, and the place where there is something reflecting the ultrasonic waves is brightly displayed. Shadows that appear in ultrasound image data are caused due to acoustic shadows that are caused by materials that are hard and reflect the ultrasound waves, such as bones. Therefore, it is difficult to reproduce shadows with general data augmentation, and it is difficult to perform appropriate data augmentation for the ultrasound image data.

Therefore, the information processing device 10 according to the first embodiment acquires output image data that is acquired by inputting image data indicating a pseudo-shadow area to an auto-encoder generated by machine learning using label image data that is contained in training data and indicates a shadow area in the ultrasound image data of a captured target. The information processing device 10 generates augmented data corresponding to the training data by combining the acquired output image data with the ultrasound image data.

For example, the information processing device 10 generates an auto-encoder using label data that indicates where the shadow is in the ultrasound image. Then, the information processing device 10 generates rough pseudo-shadow image data from the information of the ultrasound image at the time of acquisition, which is then used as input to the auto-encoder to generate shadow image data in which the shape and distribution of the actual shadow is taken into consideration. The information processing device 10 then combines the shadow image data with the ultrasound image data to generate augmented data to which noise is added.

That is, by generating the pseudo-shadow image data that imitates the shadow in the ultrasound image data and superimposing it on the ultrasound image data to perform data augmentation, the information processing device 10 can achieve effective data augmentation for the ultrasound image data and prevent overfitting of the machine learning model using the ultrasound image data.

### Functional Configuration

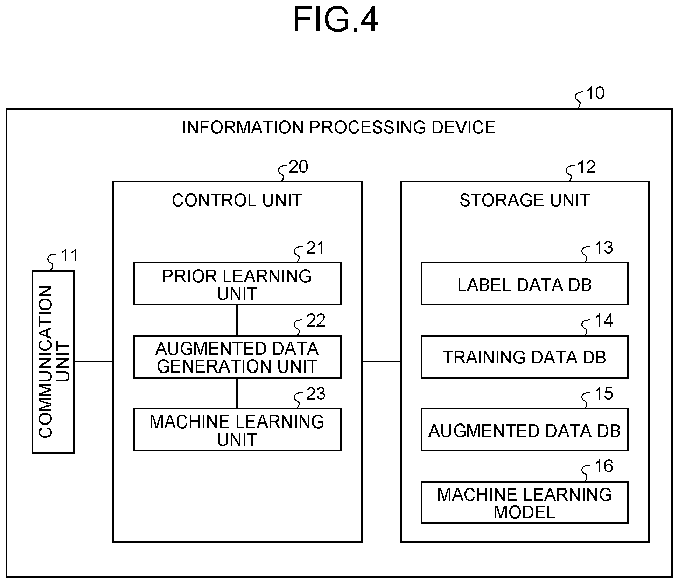

FIG. 4 is a functional block diagram illustrating the functional configuration of the information processing device 10 according to the first embodiment. As illustrated in FIG. 4, the information processing device 10 includes a communication unit 11, a storage unit 12, and a control unit 20.

The communication unit 11 is a processing unit that controls communication with other devices, and it is achieved by, for example, a communication interface or the like. For example, the communication unit 11 receives ultrasound image data measured by a measurement device, not illustrated, from the measurement device, an administrator terminal, or the like. Furthermore, the communication unit 11 receives various kinds of data from external devices such as the administrator terminal, and transmits various kinds of data to external devices.

The storage unit 12 is a processing unit that stores therein various kinds of data as well as computer programs and the like to be executed by the control unit 20, and it is achieved by a memory, a hard disk, and the like, for example. The storage unit 12 stores therein a label data DB 13, a training data DB 14, an augmented data DB 15, and a machine learning model 16.

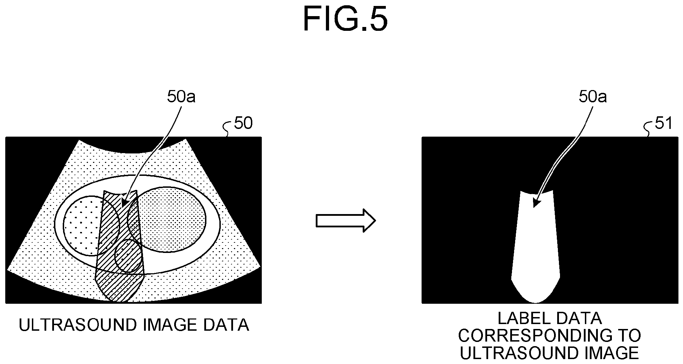

The label data DB 13 is a database that stores therein label data used for machine learning of a shadow generator by a prior learning unit 21. Specifically, the label data DB 13 stores therein label data indicating a shadow area in the ultrasound image data of a captured target, which is an example of label image data indicating where the shadow is in the ultrasound image data. FIG. 5 is a diagram for describing an example of the label data. As illustrated in FIG. 5, label data 51 indicating the position of a shadow is generated by using a shadow 50a in ultrasound image data 50 that is captured in the past.

The training data DB 14 is a database that stores therein training data used for machine learning of the machine learning model 16. For example, when supervised learning is to be performed, each piece of training data stored in the training data DB 14 is data in which ultrasound image data is associated with a label (ground truth information). As for the ultrasound image data, it is possible to employ ultrasound image data without a shadow or ultrasound image data with a shadow captured therein. Any information can be set in the label depending on the training content of the machine learning model, and one or more selected from the position of shadow, the number of shadows, presence of shadow, an organ shadow as a recognition target, and the like, for example, can be combined. It can also be used for unsupervised learning.

The augmented data DB 15 is a database that stores therein training data used for machine learning of the machine learning model 16, which is a database that stores therein augmented data that is generated by the control unit 20 to be described later. While the detail will be described later, each piece of augmented data stored in the augmented data DB 15 has the same structure as that of the training data.

The machine learning model 16 is a machine learning model generated by using DNN. For example, the machine learning model 16 is generated by using training data and augmented data. The machine learning model 16 is an example of a detector that detects, for example, the position of shadow, the number of shadows, the presence of shadow, the organ shadow as a recognition target, and the like.

The control unit 20 is a processing unit that controls the entire information processing device 10, and it is achieved by a processor or the like, for example. The control unit 20 includes the prior learning unit 21, an augmented data generation unit 22, and a machine learning unit 23.

The prior learning unit 21 is a processing unit that generates a shadow generator that executes generation of the shadow. Specifically, the prior learning unit 21 generates a shadow generator by machine learning using each piece of label data stored in the label data DB 13. That is, the prior learning unit 21 generates the shadow generator by machine learning using label data indicating a shadow area in the ultrasound image data of a captured target.

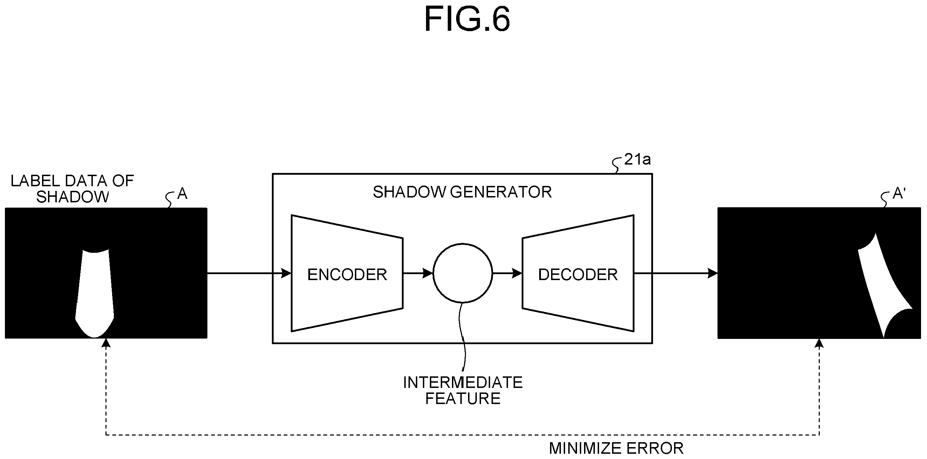

FIG. 6 is a diagram for describing machine learning of a shadow generator 21a. As illustrated in FIG. 6, the prior learning unit 21 inputs shadow label data A stored in the label data DB 13 to the shadow generator 21a, and acquires an output result A' generated by the shadow generator 21a. Then, the prior learning unit 21 optimizes the parameters, weights, and the like of the DNN such that the error between the label of the shadow label data A and the output result A' is minimized.

Note here that a commonly used loss function such as the mean square error can be employed for the loss function of machine learning, and a commonly used optimization method such as the gradient descent method (Momentum SGD) can be employed for optimization. Furthermore, as the shadow generator 21a, it is possible to employ an auto-encoder or the like, which includes an encoder that extracts an intermediate feature from input data and a decoder that restores the input data from the intermediate feature.

The augmented data generation unit 22 is a processing unit that generates augmented data by augmenting the training data. Specifically, the augmented data generation unit 22 acquires output image data that is acquire by inputting image data indicating a pseudo-shadow area to the shadow generator 21a generated by the prior learning unit 21. Subsequently, the augmented data generation unit 22 generates augmented data corresponding to the training data by combining the acquired output image data with the ultrasound image data. Then, the augmented data generation unit 22 stores the generated augmented data in the augmented data DB 15.

That is, the augmented data generation unit 22 generates pseudo-shadow image data in which a shadow is roughly inserted with respect to the ultrasound image data as an original, and inputs the pseudo-shadow image data to the shadow generator 21a to generate pseudo-shadow image data with a high-quality shadow. Then, the augmented data generation unit 22 generates the augmented data in which the original ultrasound image data and the pseudo-shadow image data with high-quality shadow are combined.

Herein, generation of rough pseudo-shadow image data, generation of high-quality pseudo-shadow image data, and generation of augmented data will be described, respectively.

### Generation of Rough Pseudo-shadow Image Data

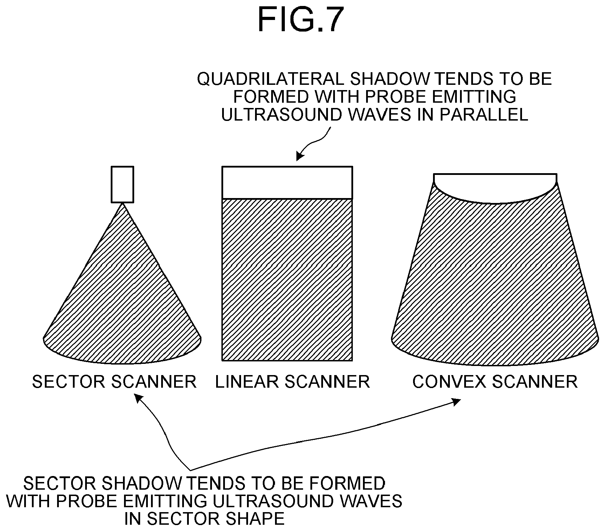

The augmented data generation unit 22 generates rough pseudo-shadow image data on a rule base. For example, the augmented data generation unit 22 determines the rough shape of the shadow according to the device such as a probe used during ultrasound measurements and the target organ. FIG. 7 is a diagram for describing relationships between types of probes and types of shadows. As illustrated in FIG. 7, the augmented data generation unit 22 determines the shape of the shadow to be a sector shape when a probe such as a sector scanner or convex scanner, which tends to emit ultrasound waves in a sector shape, is used. Furthermore, the augmented data generation unit 22 determines the shape of the shadow to be a quadrilateral shape when a probe such as a linear scanner, which tends to emit ultrasound waves in parallel, is used.

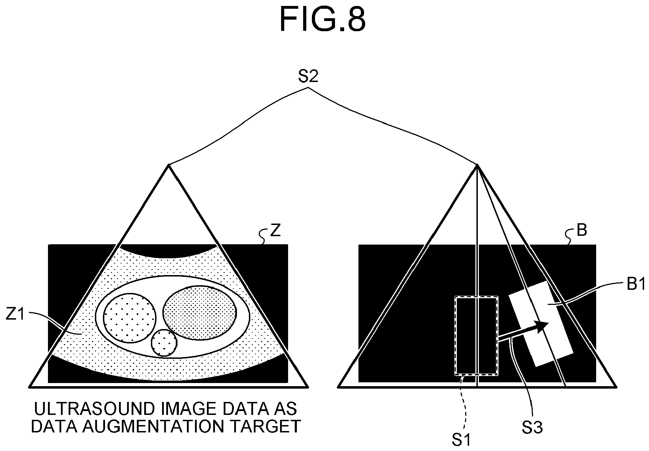

Next, generation of the rough pseudo-shadow image data will be described by referring to a case of a convex scanner as an example. FIG. 8 is a diagram for describing generation of the rough pseudo-shadow image data. As illustrated in FIG. 8, the augmented data generation unit 22 selects the ultrasound image data as a target of data augmentation to be the augmentation source. For example, the augmented data generation unit 22 acquires training data Z (ultrasound image data Z) stored in the training data DB 14.

Then, the augmented data generation unit 22 generates solid black image data B that is in the same size as that of the training data Z (ultrasound image data Z) and disposes, in the image data B, an area of randomly sized rectangle (or annular sector) B1 filled with white (S1). The augmented data generation unit 22 then estimates the emission position of the ultrasound waves from the ultrasound image (image Z1) captured in the ultrasound image data Z (S2). For example, the augmented data generation unit 22 can estimate the intersection of the extended lines of both ends of the ultrasound image as the emission position. When the emission position is known, it can be used as well.

Thereafter, the augmented data generation unit 22 randomly rotates the rectangle B1 disposed in the image data B about the estimated emission position of the ultrasound waves without going beyond the place where the image Z1 appears in the ultrasound image data Z (S3). In this manner, the augmented data generation unit 22 can generate the rough pseudo-shadow image data B.

### Generation of High-quality Pseudo-shadow Image Data

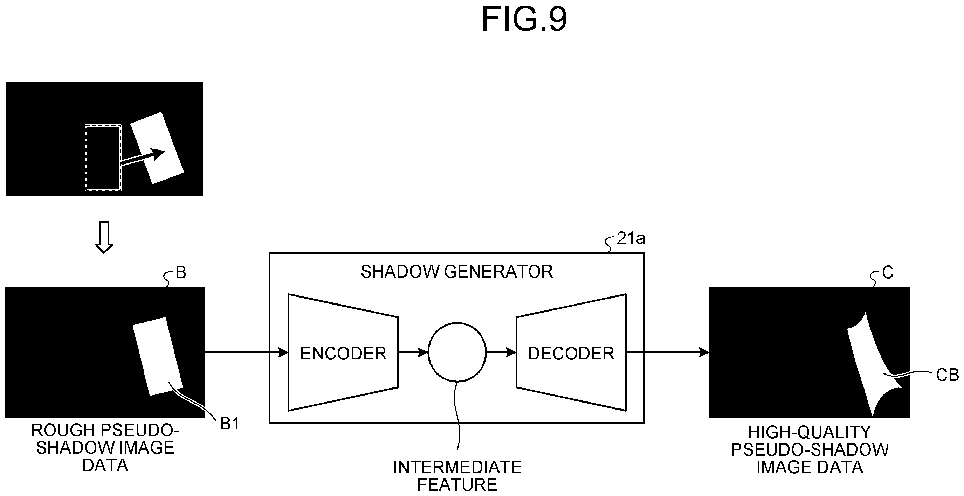

Next, the augmented data generation unit 22 generates high-quality pseudo-shadow image data by using the shadow generator 21a. FIG. 9 is a diagram for describing generation of the high-quality pseudo-shadow image data. As illustrated in FIG. 9, the augmented data generation unit 22 inputs the rough pseudo-shadow image data B to the shadow generator 21a, and acquires an output result of the shadow generator 21a. The augmented data generation unit 22 then makes the output result of the shadow generator 21a into high-quality pseudo-shadow image data C. The high-quality pseudo-shadow image data C comes to contain a pseudo-shadow CB that is reproduced with high quality.

### Generation of Augmented Data

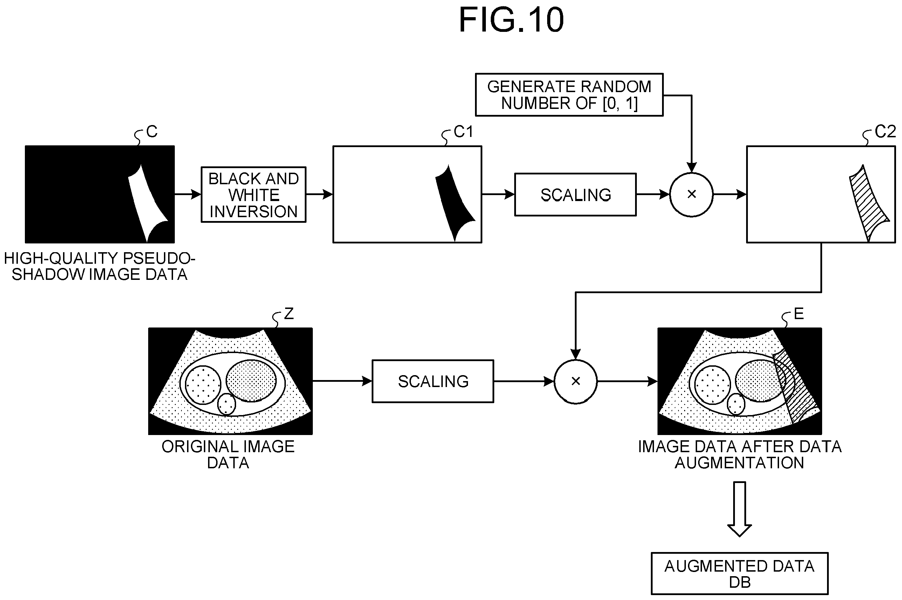

Next, the augmented data generation unit 22 generates augmented data by superimposing the high-quality pseudo-shadow image data C and the original ultrasound image data Z. FIG. 10 is a diagram for describing generation of the augmented data. As illustrated in FIG. 10, the augmented data generation unit 22 inverts black and white of the high-quality pseudo-shadow image data C, performs scaling of the high-quality pseudo-shadow image data C1 after the black and white inversion, and generates image data C2 in which shadow density is adjusted by multiplying the scaled image data C1 by a random number in a range of [0, 1].

Then, the augmented data generation unit 22 executes the same scaling on the ultrasound image data Z that is the original image data, and multiplies the scaled ultrasound image data Z and the image data C2 pixel by pixel to generate augmented data E. For the scaling, it is possible to employ known methods (normalization) such as 0-1 scaling, where the minimum value is 0 and the maximum value is 1.

When the augmented data E is to be used for supervised learning, the augmented data generation unit 22 assigns a label (objective variable) corresponding to the training content of the machine learning model to the generated augmented data E, and stores it in the augmented data DB 15. In the meantime, when the augmented data E is to be used for unsupervised learning, the augmented data generation unit 22 stores the generated augmented data E in the augmented data DB 15.

Returning to FIG. 4, the machine learning unit 23 is a processing unit that generates the machine learning model 16 by performing machine learning using the training data and the augmented data. Specifically, the machine learning unit 23 executes training of the machine learning model 16 using various machine learning methods such as supervised learning and unsupervised learning depending on the application of the machine learning model 16.

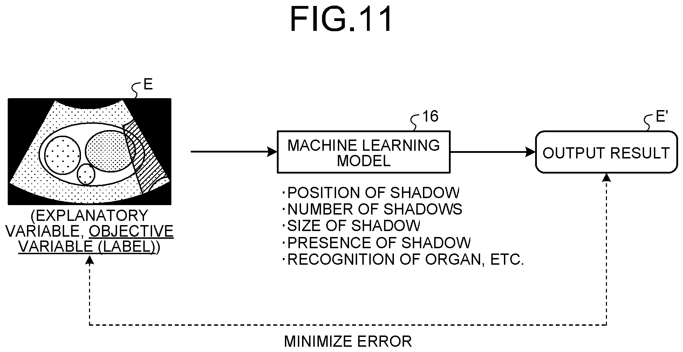

FIG. 11 is a diagram for describing generation of the machine learning model 16 using the augmented data. Referring to FIG. 11, supervised learning using the augmented data E will be described as an example. As illustrated in FIG. 11, the augmented data E has an explanatory variable and an objective variable. Note here that the explanatory variable is the image data of the augmented data E, and the objective variable is the ground truth information determined by the training content. The machine learning unit 23 inputs the augmented data E to the machine learning model 16, and acquires an output result E' of the machine learning model 16. The machine learning unit 23 then executes training of the machine learning model 16 such that the error between the objective variable of the augmented data E and the output result E' is minimized.

As the training content of the machine learning model 16, there may be detection of the position of shadow, detection of the number of shadows, detection of the size of shadow, detection of the presence of shadow, recognition of organs, and the like, or a combination of these. Therefore, as the labels (objective variables) for the augmented data E, the position of shadow, the number of shadows, the size of shadow, the presence of shadow, the name of organ, and the like are set.

When the ultrasound image data is input, the machine learning model 16 generated in this manner outputs the detection results of the position and the like of the shadow, the recognition result of the organ, and the like depending on the training content.

### Flow of Process

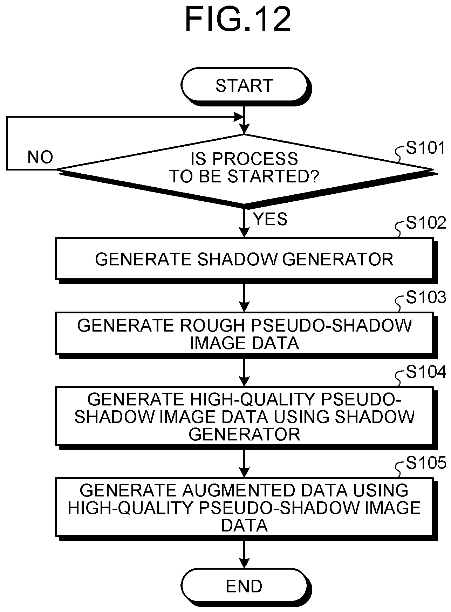

FIG. 12 is a flowchart illustrating a flow of augmented data generation process. As illustrated in FIG. 12, when the start of process is indicated by the administrator or the like (Yes at S101), the prior learning unit 21 generates the shadow generator 21a by using label data stored in the label data DB 13 (S102).

When the shadow generator 21a is generated, the augmented data generation unit 22 generates rough pseudo-shadow image data on a rule base on the basis of the ultrasound image data as the original (S103). The augmented data generation unit 22 then inputs the rough pseudo-shadow image data to the shadow generator 21a to generate high-quality pseudo-shadow image data (S104).

Thereafter, the augmented data generation unit 22 combines the high-quality pseudo-shadow image data with the original ultrasound image data to generate the augmented data (S105). Each of the above processes can be interchanged as appropriate within a range that has no contradiction. While it is described in a series of flow in FIG. 12, each of the processes is not limited thereto but generation of the shadow generator 21a, generation of the rough pseudo-shadow image data, generation of the high-quality pseudo-shadow image data, and generation of the augmented data can also be executed in separate flows.

### Effects

As described above, the information processing device 10 can perform data augmentation by, using DNN, configuring and training the shadow generator 21a, which generates a pseudo shadow that is a reproduction of the shadow in the ultrasound image data, and generating highly accurate pseudo-shadow image data to be superimposed on the original ultrasound image data. As a result, the information processing device 10 can achieve effective data augmentation also for the ultrasound image data. Therefore, the information processing device 10 can execute training of the target machine learning model by machine learning using the training data and the highly accurately generated augmented data, and can prevent overfitting of the machine learning model using the ultrasound image data.

Since the information processing device 10 generates a shadow area according to the shape of the probe that emits the ultrasound waves, it is possible to reproduce the condition of the ultrasonography and improve the accuracy of the augmented data. Furthermore, since the information processing device 10 can generate the rough pseudo-shadow image data using a method based on the emission position and then generate the high-quality pseudo-shadow image data, it is possible to improve the accuracy of the final augmented data.

### [b] Second Embodiment

By the way, by generating the pseudo-shadow image data according to the state of the actually occurring shadow, it is possible to reproduce occurrence of the shadow in accordance with the actual ultrasonography. Therefore, in a second embodiment, generation of pseudo-shadow image data based on statistical data will be described.

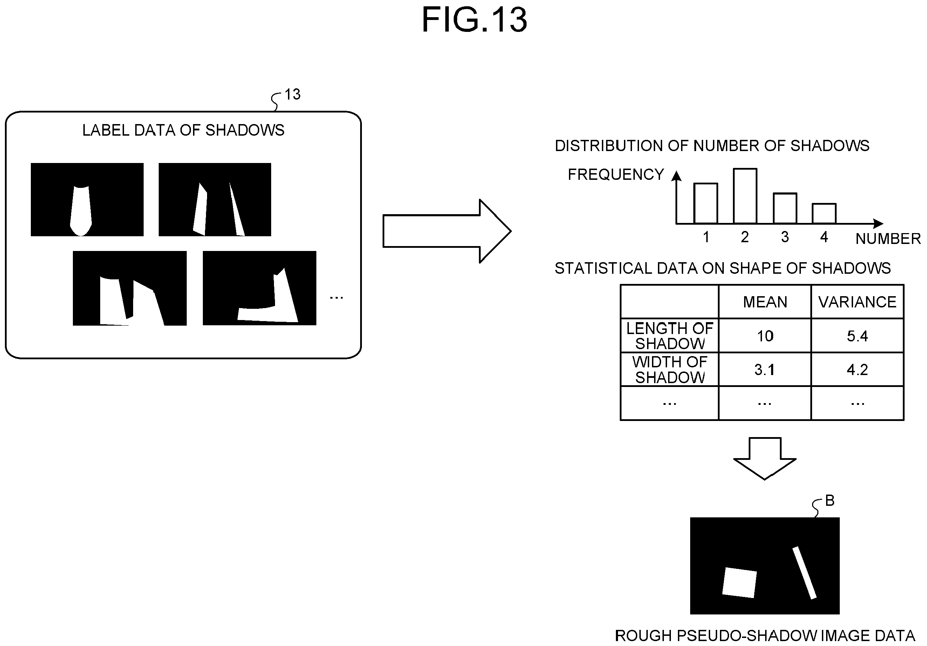

Specifically, when the label data contains a variety of shadow shapes, meta-information for generating rough shadows may be calculated from the label data. FIG. 13 is a diagram for describing generation of the augmented data using statistical data. As illustrated in FIG. 13, the augmented data generation unit 22 refers to the label data DB 13 that stores therein the label data of the shadows generated from the ultrasound image data captured in the past, and generates a distribution of the number of shadows as the shadow statistical data of each piece of the label data. For example, the augmented data generation unit 22 generates the distribution of the number of shadows, such as 20% of label data with one shadow, 40% of label data with two shadows, and the like, among the entire label data. Furthermore, the augmented data generation unit 22 specifies the shapes such as the length of the shadow and the width of the shadow for the entire label data, and generates statistical data regarding the shapes, such as the mean and variance of the length of the shadows, the mean and variance of the width of the shadows, and the like.

The augmented data generation unit 22 generates the rough pseudo-shadow image data based on the distribution of the shadows and the statistical data regarding the shapes of the shadows. For example, the augmented data generation unit 22 generates 20% of pseudo-shadow image data with one shadow and 40% of pseudo-shadow image data with two shadows according to the distribution of the shadows. At that time, the augmented data generation unit 22 determines the shape of the shadow to be generated according to the mean and variance. For example, referring to the length of the shadow as an example, the augmented data generation unit 22 generates the rough pseudo-shadow image data B containing a shadow of average length when the variance is less than a threshold, and generates a plurality of pieces of rough pseudo-shadow image data B having shadows with lengths randomly changed from the average length when the variance is equal to or higher than the threshold.

As another example, when the shadow label data has labels of factors of the shadows and the shapes of the shadows differ significantly due to the factors, the information processing device 10 may calculate the information for generating rough shadows from the label data for each of the factors. At that time, the information processing device 10 can also calculate the frequency distribution of the factors of the shadows, sample the factor of the shadow first at the time of generation, and then generate a rough shadow using the above information corresponding to the factor.

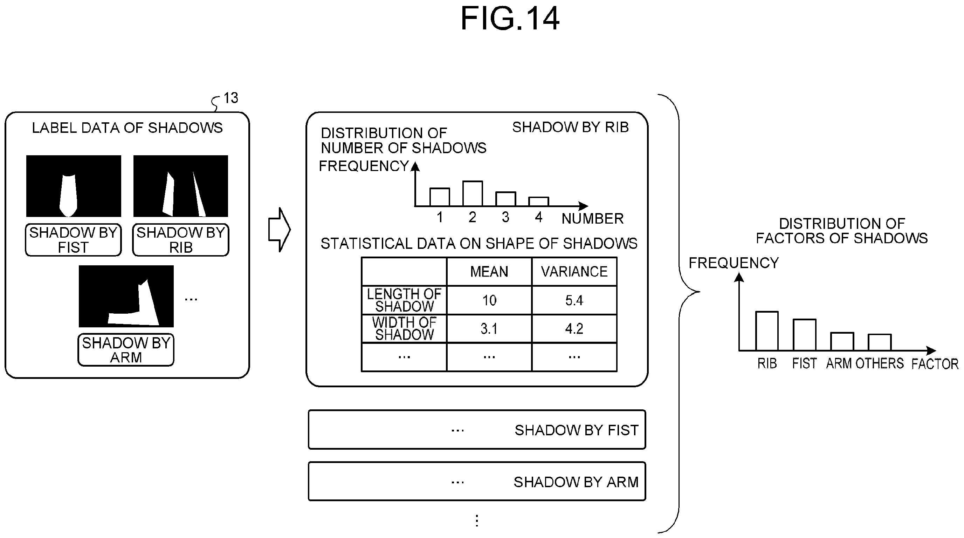

FIG. 14 is a diagram for describing generation of the augmented data using the statistical data. As illustrated in FIG. 14, the label data DB 13 stores therein label data with labels indicating factors of shadows, such as label data for a shadow caused by a fist (label: fist), label data for a shadow caused by a rib (label: rib), label data for a shadow caused by an arm (label: arm), and the like.

The augmented data generation unit 22 then generates the distribution of the number of shadows and the statistical data regarding the shapes of the shadows for each of the factors. The augmented data generation unit 22 generates the rough pseudo-shadow image data for each of the factors by the method described in FIG. 13.

The augmented data generation unit 22 also counts the number of pieces of label data for each of the factors, and generates the distribution of the factors of shadows in the label data. Then, the augmented data generation unit 22 generates the rough pseudo-shadow image data corresponding to each of the factors according to the distribution of the factors of the shadows. For example, assuming that 60% of the entire label data is the shadow of a rib, 30% is the shadow of a fist, and 10% is the shadow of an arm, it is considered to generate a hundred pieces of augmented data. In this case, the augmented data generation unit 22 generates 60 pieces of rough pseudo-shadow image data of the rib, 30 pieces of rough pseudo-shadow image data of the fist, and 10 pieces of rough pseudo-shadow image data of the arm to have the number of pieces of final augmented data same as the distribution of the factors of the shadows.

Regardless of which of the methods in FIG. 13 and FIG. 14 is used, the method of the first embodiment is used to generate high-quality pseudo-shadow image data and to generate augmented data.

### [c] Third Embodiment

### Examples of Numerical Values

The examples of factors, values in each of distributions, means, and variances, examples of numerical values, examples of labels, and the like used in the above embodiments are only examples and can be changed as desired. Furthermore, while the case of using the auto-encoder as the shadow generator 21a is described in the above embodiments, the shadow generator 21a is not limited thereto. For example, it is possible to use a Variational Auto-Encoder (VAE) or adversarial learning.

VAE is expected to operate stably even if the shadow label images used during training and the rough pseudo-shadow images used during generation look very different, since regularization is applied such that the intermediate features are in the standard normal distribution. In particular, by using it when the rough pseudo-shadow image to be the seed and the appearance of the shadow to be generated are significantly different, stable machine learning can be executed. Adversarial learning is expected to be able to generate more realistic images, since it is performed such that the image to be generated and the shadow label image become indistinguishable. It is particularly effective for generating shadows with still higher quality.

### System

The process procedures, control procedures, specific names, and information including various kinds of data and parameters indicated in the above description and drawings may be changed as desired, unless otherwise noted.

Furthermore, the specific forms of distribution and integration of the structural components of each of the devices are not limited to those illustrated in the drawings. For example, generation of the shadow generator 21a, generation of the augmented data, and training of the machine learning model 16 can be executed by separate devices. That is, all or some of the structural components may be functionally or physically distributed/integrated in arbitrary units, depending on various loads, usage conditions, and the like. Moreover, all or arbitrary part of each processing function of each of the devices can be achieved by a CPU and a computer program that is analyzed and executed by the CPU, or by hardware using wired logic. Hardware

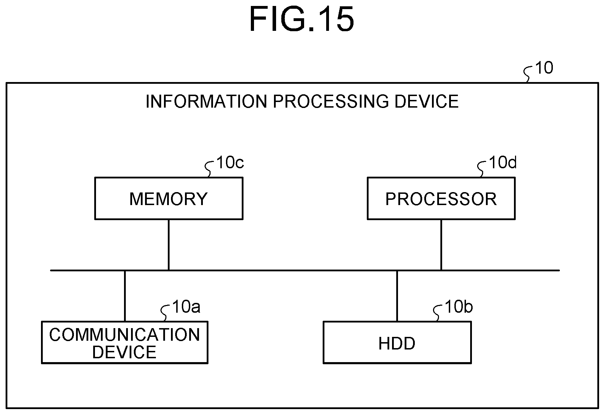

FIG. 15 is a diagram for describing an example of a hardware configuration. As illustrated in FIG. 15, the information processing device 10 includes a communication device 10a, a hard disk drive (HDD) 10b, a memory 10c, and a processor 10d. The units illustrated in FIG. 15 are connected to each other by a bus or the like.

The communication device 10a is a network interface card or the like, which communicates with other devices. The HDD 10b stores therein computer programs and DBs for operating the functions illustrated in FIG. 4.

The processor 10d operates the processes for executing each of the functions described in FIG. 4 and the like by reading out a computer program, which executes the same processes as those of each of the processing units illustrated in FIG. 4, from the HDD 10b or the like, and loading it onto the memory 10c. For example, the processes execute the same functions as those of each of the processing units provided to the information processing device 10. Specifically, the processor 10d reads out, from the HDD 10b or the like, a computer program having the same functions as those of the prior learning unit 21, the augmented data generation unit 22, the machine learning unit 23, and the like. Then, the processor 10d executes the process for executing the same processes as those of the prior learning unit 21, the augmented data generation unit 22, the machine learning unit 23, and the like.

As described, the information processing device 10 operates as an information processing device that executes an augmented data generation method by reading out and executing the computer program. The information processing device 10 can also achieve the same functions as those described in the embodiments by reading out the computer program from a recording medium using a medium reader and executing the read-out computer program. Note that the computer program in this other embodiment is not limited to being executed by the information processing device 10.
For example, the above embodiments may be applied in the same manner to a case where another computer or server executes the computer program or a case where those execute the computer program in cooperation.

The computer program may also be distributed via a network such as the Internet. The computer program may also be recorded on a computer-readable recording medium such as a hard disk, a flexible disk (FD), a CD-ROM, an MO (Magneto-Optical disk), or a DVD (Digital Versatile Disc), and read out from the recording medium and executed by a computer.

According to one embodiment, it is possible to prevent overfitting of the machine learning model using the ultrasound image data.

## Claims

1. A generation program that causes a computer (10) to execute a process comprising:
acquiring (22) output image data that is acquired by inputting image data indicating a pseudo-shadow area to an auto-encoder that is generated by machine learning using label image data contained in training data, the label image data indicating a shadow area in ultrasound image data of a captured target; and
first generating (22) augmented data corresponding to the training data by combining the acquired output image data with the ultrasound image data.

2. The generation program according to claim 1, wherein the process further includes:
second generating (22) a shadow area corresponding to a shape of a probe that emits an ultrasound wave used for ultrasonography; and
third generating (22) image data indicating the generated shadow area.

3. The generation program according to claim 2, wherein
the second generating (22) includes disposing, in solid black image data, an area that is filled with white and corresponds to the shape of the probe; and
the third generating (22) includes estimating an emission position of the ultrasound wave from ultrasound image data having an image captured in past, and generating the image data indicating the pseudo-shadow area by rotating the area from a place where the image appears in the ultrasound image data about the estimated emission position.

4. The generation program according to any one of claims 1 to 3, the process further includes:
fourth generating (22) statistical data of actually formed shadows from a plurality of pieces of ultrasound image data captured in the past; and
fifth generating (22) the image data indicating the pseudo-shadow area according to the statistical data of the shadows.

5. The generation program according to claim 4, wherein
the fourth generating (22) includes generating, as the statistical data, a distribution of a number of shadows, a mean and a variance of lengths of the shadows, and a mean and a variance of widths of the shadows; and
the fifth generating (22) includes determining a shape of the shadow based on the statistical data, and generating the image data indicating the determined shape of the shadow.

6. The generation program according to claim 4 or 5, wherein
the fourth generating (22) includes generating a distribution of factors of the shadows as the statistical data; and
the fifth generating (22) includes generating the image data in a number of pieces corresponding to each of the factors, according to the distribution of the factors of the shadows.

7. The generation program according to any one of claims 1 to 6, wherein the first generating (22) includes generating the augmented data corresponding to the training data by multiplying the output image data and the ultrasound image data pixel by pixel.

8. A generation method comprising:
acquiring (22) output image data that is acquired by inputting image data indicating a pseudo-shadow area to an auto-encoder that is generated by machine learning using label image data contained in training data, the label image data indicating a shadow area in ultrasound image data of a captured target; and
generating (22) augmented data corresponding to the training data by combining the acquired output image data with the ultrasound image data.

9. An information processing device (10) comprising:
an acquisition unit (22) configured to acquire output image data that is acquired by inputting image data indicating a pseudo-shadow area to an auto-encoder that is generated by machine learning using label image data contained in training data, the label image data indicating a shadow area in ultrasound image data of a captured target; and
a generation unit (22) configured to generate augmented data corresponding to the training data by combining the acquired output image data with the ultrasound image data.
